# EUROPEAN PATENT SPECIFICATION

(11) **EP 2 919 397 B1**
(45) Date of publication and mention of the grant of the patent: **29.06.2016**
(21) Application number: 14305366.8
(22) Date of filing: 13.03.2014
(51) Int. Cl.: H04B 10/61

(54) **Method for digitally demodulating a modulated optical signal, and associated coherent optical receiver**
Verfahren zur digitalen Demodulation eines modulierten optischen Signals und zugehöriger kohärenter optischer Empfänger
Procédé de démodulation numérique d'un signal optique modulé et récepteur optique cohérent associé

(43) Date of publication of application: 16.09.2015
(73) Proprietor: ALCATEL LUCENT, 92100 Boulogne-Billancourt (FR)
(72) Inventor: Dorize, Christian, 91620 Nozay (FR); Charlet, Gabriel, 91620 Nozay (FR)
(74) Representative: Berthier, Karine

(56) References cited:
- EP-A1- 2 357 740
- EP-A1- 2 693 665
- US-A1- 2010 329 698
- US-A1- 2012 076 502

## Description

### Field of the Invention

The present invention generally relates to the field of optical communication networks, in particular to coherent optical receivers for optical communication networks. More in particular, the present invention relates to coherent optical receivers adapted to digitally demodulate an entry modulated optical signal, according to a variable demodulation processing setup.

### Background

In a typical optical communication network, optical signals are transmitted along optical links (typically, optical fibers) between nodes of the network. Typically, an optical signal results from the digital modulation of the amplitude and/or phase of the light emitted by a light source (such as a laser) included in a transmitter of a node, at a certain wavelength, and it propagates along an optical fiber.

For increasing the capacity of the optical fiber, it is also known to implement the Polarization Division Multiplexing (PDM) technique, which consists in transmitting, along a same optical fiber, two optical signals onto light carriers having a same wavelength but orthogonal states of polarization.

At a receiver side, the optical signals (one per polarization) are typically processed, e.g. by a coherent optical receiver.

A coherent optical receiver typically comprises a local oscillator generating a local light carrier, which is combined with the received optical signals. After a photoelectric conversion of the resulting optical signals, base band electric signals are obtained. The base band electric signals are subsequently processed by analog-to-digital converters (one per polarization), which convert them into corresponding digital signals (one per polarization), and a digital processing block which is composed of one or several digital signal processor(s) (DSP), typically one or several microprocessor(s).

Besides, some particular coherent optical receivers are adapted to select and apply, via their digital processing block, a digital demodulation processing setup among at least two distinct digital demodulation processing setups. The selection of the digital modulation format and hence of the demodulation processing setup to be applied depends for example on the value of a desired data rate within the optical communication network. Such coherent optical receivers are traditionally called "elastic" coherent optical receivers, which means that they are adapted to apply, for example, a variable digital demodulation processing setup.

The digital processing block comprises a module performing the digital compensation of the chromatic dispersion (in the following indicated also as simply CD) of the recovered digital signals. The digital processing block typically further comprises an adaptive equalizer for addressing linear polarization-dependent impairments such as polarization mode dispersion (PMD), and a module for correcting and decoding the equalized digital signals. Such a correction decoder comprises a plurality of decoding modules which are serially connected. A coherent optical receiver according to the state of the art is known from document US-A-20120076502.

### Summary

Thereafter, the term "robustness" means the ability of a modulation format / a demodulation setup to comply with linear and/or non linear impairments met during the transmission of the modulated signal.

The inventors noticed that the module performing the CD compensation and the correction decoder are by far the two most power consuming modules among the signal processing modules of the coherent optical receiver. Indeed, the CD compensating module and the correction decoder may each consume an amount of power for example substantially equal to 20 W, regardless of the selected digital demodulation processing setup.

Indeed, the hardware of the CD compensating module performs a fixed number of calculations which is tailored on the maximum amount of chromatic dispersion to be compensated. Such maximum amount of chromatic dispersion is related to the maximal optical transmission reach, yielded by the most robust modulation format. Thus, the same CD compensation configuration is used whatever the desired data rate and hence the selected digital demodulation processing setup. However, if the optical signal is transmitted along an optical link whose length is shorter than the optical transmission reach, or if the optical reach associated to the selected demodulation processing setup is lower than the maximum optical reach cited above, the CD compensating module is over-dimensioned for performing the digital compensation of the chromatic dispersion. This leads to a power overconsumption from the CD compensating module.

Similarly, the correction decoder is dimensioned to extend as much as possible the optical reach of the least robust demodulation processing setup (which is the shortest reach). Thus, the same correction decoder configuration is used whatever the desired data rate and hence the selected digital demodulation processing setup. However, if the optical signal is transmitted along an optical link whose length is shorter than the optical transmission reach associated with the modulation format, the correction decoder is over-dimensioned. This leads to a power overconsumption from the correction decoder.

So an object of this invention is to provide a method for digitally demodulating an entry modulated optical signal received at a coherent optical receiver which allows saving computational resources and, therefore, reducing the power consumed by the receiver.

According to a first aspect, the present invention provides a method for digitally demodulating an entry modulated optical signal, said entry optical signal being received at a coherent optical receiver of a node of an optical communication network, said coherent optical receiver being adapted to select and apply a digital demodulation processing setup among at least two distinct digital demodulation processing setups, said coherent optical receiver comprising a correction decoder including a plurality of decoding modules, said method comprising:
- a step of selection of a chromatic dispersion compensation algorithm setup among at least two distinct chromatic dispersion compensation algorithm setups, based on a value of at least one predetermined parameter received by the coherent optical receiver,
- a step of compensating chromatic dispersion of the entry optical signal, based on said selected algorithm setup,
- a step of processing the compensated signal, said processing being based on the selected digital demodulation processing setup,
- a step of inhibiting none or some of the decoding modules, based at least on said value of said predetermined parameter,
- a step of decoding the processed signal, said decoding step being performed by the non-inhibited decoding modules.

Advantageously, thanks to the steps of selection of a chromatic dispersion compensation algorithm setup and of inhibiting none or some of the decoding modules, based on the value of the at least one predetermined parameter, the invention balances the power consumption between the CD compensating module and the correction decoder according to the predetermined parameter, and thus allows reducing the maximum power consumed by the receiver.

The method may include additional characteristics considered separately or combined, and notably:
- the selection of a chromatic dispersion compensation algorithm setup and the inhibition of none or some of the decoding modules are based on the value of a single predetermined parameter transmitted to the coherent optical receiver, said single predetermined parameter being a data rate output, the selection of the digital demodulation processing setup applied on the entry optical signal by the coherent optical receiver depending on the value of said single predetermined parameter ;
- the data rate output is a wavelength-division multiplexing data rate output;
- the selection of a chromatic dispersion compensation algorithm setup and the inhibition of none or some of the decoding modules are based on the value of a first predetermined parameter transmitted to the coherent optical receiver, combined with the value of a second predetermined parameter and a third predetermined parameter, the first predetermined parameter being a data rate of the optical communication network, notably a wavelength-division multiplexing data rate, the second predetermined parameter being a cumulated chromatic dispersion information, the third predetermined parameter being a quality factor related to a lightpath, the selection of the digital demodulation processing setup applied on the entry optical signal by the coherent optical receiver depending on the value of the first predetermined parameter;
- the cumulated chromatic dispersion information and the quality factor related to a lightpath are transmitted to the coherent optical receiver or periodically estimated by the receiver;
- the coherent optical receiver further comprises a memory that stores a look-up table, said look-up table having as inputs said first, second and third predetermined parameters, said look-up table having as outputs said chromatic dispersion algorithm setup to be selected and a number of said decoding modules to be inhibited.

According to a second aspect, the present invention provides a computer program product comprising a set of instructions arranged, when it is executed by processing means, for performing the method such as the one above introduced to allow digitally demodulating an entry modulated optical signal.

According to a third aspect, the present invention provides a coherent optical receiver for a node of an optical communication network, said receiver being equipped with a digital demodulator adapted to digitally demodulate an entry modulated optical signal by selecting and applying a digital demodulation processing setup among at least two distinct digital demodulation processing setups, said digital demodulator comprising:
- a chromatic dispersion compensating module comprising a selector of a chromatic dispersion compensation algorithm setup among at least two distinct chromatic dispersion compensation algorithm setups, based on at least one predetermined parameter,
- a processing module connected to the chromatic dispersion compensating module, said processing module being adapted to process the compensated signal, said processing being based on the selected digital demodulation processing setup,
- a correction decoder connected to the processing module, said decoder comprising a plurality of decoding modules and an inhibitor of some of these decoding modules based on said at least one predetermined parameter.

The coherent optical receiver may include additional characteristics considered separately or combined, and notably:
- the correction decoder is a soft-decision forward error correction decoder;
- the decoding modules are low density parity check decoding modules ;
- the chromatic dispersion compensating module comprises a Fast Fourier Transform buffer;
- the coherent optical receiver further comprises a memory that stores a look-up table ;
- the coherent optical receiver further comprises a module adapted for estimating a cumulated chromatic dispersion value and/or a quality
factor value related to a lightpath, said estimating module being connected to the memory.

According to a fourth aspect, the present invention provides an optical communication network comprising at least two nodes, each node in turn comprising at least one coherent optical receiver as set forth above.

### Brief Description of the Figures

Some embodiments of apparatus and/or methods in accordance with embodiments of the present invention are now described, by way of example only, and with reference to the accompanying drawings, in which :
- The Figure 1 schematically and functionally illustrates a coherent optical receiver for a node of an optical communication network according to a first embodiment of the present invention,
- The Figure 2 schematically illustrates a flowchart of the method for digitally demodulating an entry modulated optical signal according to the invention, the method being implemented by the coherent optical receiver of Figure 1,
- The Figure 3 schematically and functionally illustrates a coherent optical receiver for a node of an optical communication network according to a second embodiment of the present invention.

### Description of Embodiments

Hereafter is notably disclosed a method intended for digitally demodulating an entry modulated optical signal 2.

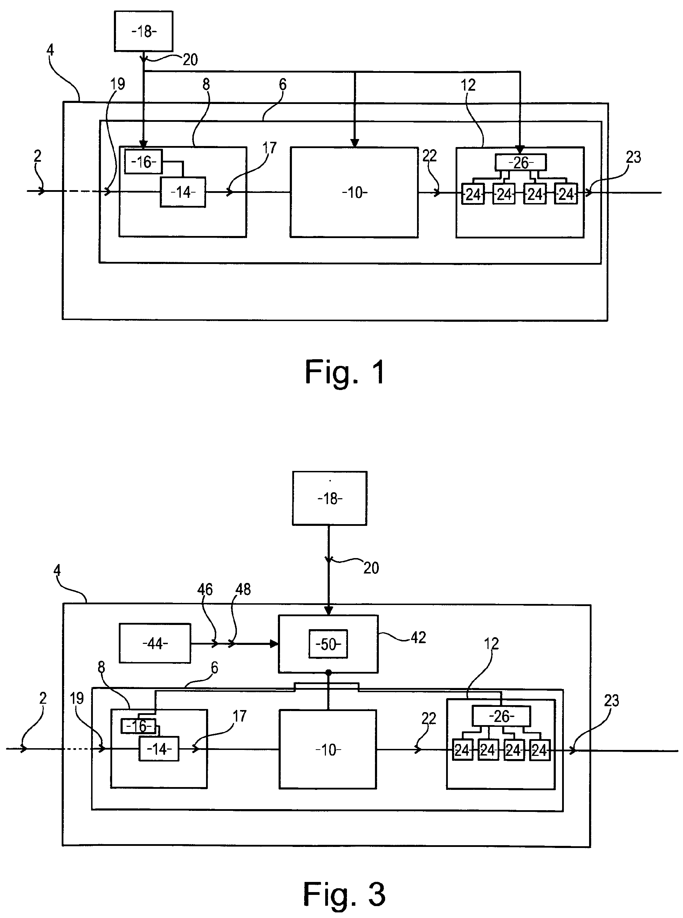

Figure 1 shows a coherent optical receiver 4 for a node of an optical communication network (not shown in the drawings) according to a first embodiment of the present invention. In the following description it will be considered that the optical communication network is for example a wavelength-division multiplexing communication network, and that the coherent optical receiver 4 is a transponder of the network. But this is not limited to this kind of optical communication network.

The coherent optical receiver 4 is equipped with a digital demodulator 6. The coherent optical receiver 4 may comprise further modules, such as analog modules and analog-to-digital converters, that are not shown in Figure 1 and will not be described since they are not relevant to the present description.

The digital demodulator 6 is adapted to digitally demodulate the entry modulated optical signal 2 by selecting and applying a digital demodulation processing setup among at least two distinct digital demodulation processing setups. In the exemplary embodiment of Figure 1, the digital demodulator 6 is adapted to select and apply one digital demodulation processing setup among a first demodulation processing setup and a second demodulation processing setup. The first demodulation processing setup is for example a known per se Quadrature Phase-Shift Keying (QPSK) demodulation processing setup, and the second processing setup is for example a known per se 16-state Quadrature Demodulation (16QAM) processing setup. According to this example, the first demodulation processing setup has a longer achievable optical reach than that of the second demodulation processing setup thanks to the higher robustness to impairments of the QPSK compared to that of the 16QAM.

The digital demodulator 6 comprises a chromatic dispersion (in the following indicated also as simply CD) compensating module 8, a processing module 10 and a correction decoder 12 which are all serially connected. The digital demodulator 6 is preferably a digital signal processor (DSP). Alternatively, the digital demodulator 6 is composed of several interconnected digital signal processors.

The chromatic dispersion compensating module 8 comprises a chromatic dispersion compensator stage 14 and a selector 16 of a chromatic dispersion compensation algorithm setup. The CD compensating module 8 is adapted to provide a CD compensated signal 17 on its output.

The CD compensator stage 14 has a first input substantially corresponding to one input of the digital demodulator 6, and a second input connected to an output of the selector 16. The CD compensator stage 14 further has an output substantially corresponding to an output of the CD compensating module 8. The CD compensator stage 14 is adapted to apply a chromatic dispersion compensation algorithm setup onto a digital modulated entry signal 19 received on its first input. In the particular embodiment of Figure 1, the CD compensator stage 14 preferably comprises a Fast Fourier Transform buffer.

The selector 16 has an input substantially corresponding to one input of the digital demodulator 6. In the exemplary embodiment of Figure 1, the input of the selector 16 is connected to a control plane apparatus 18 of the optical communication network. The selector 16 is adapted to select one CD compensation algorithm setup among at least two distinct CD compensation algorithm setups, based on at least one predetermined parameter. In the exemplary embodiment of Figure 1, the selector 16 is adapted to select one CD compensation algorithm setup among a first CD compensation algorithm setup and a second CD compensation algorithm setup, based on the value of a single predetermined parameter 20 transmitted by the control apparatus 18 to the selector 16. The predetermined parameter 20 is preferably a data rate of the optical communication network. In the embodiment of Figure 1, the data rate 20 is a wavelength-division multiplexing data rate. The selection of the digital demodulation processing setup to be applied by the digital demodulator 6 further depends on the value of the predetermined parameter 20. In the embodiment of Figure 1, the data rate 20 is likely to have two distinct values: a first value and a second value, the first value being higher than the second one.

In a particular embodiment, the compensation algorithm is preferably a frequency domain digital algorithm comprising performing a Fast Fourier Transform, a filtering and a reverse Fast Fourier Transform on a number of digital samples of the optical signal 2. For example, the CD compensation algorithm is an algorithm such as the frequency domain digital algorithm according to the invention disclosed in the document EP 2 693 665 A1, using a variable-complexity Fast Fourrier Transform with a variable window size and a window overlap. In this particular embodiment of Figure 1, the second CD compensation algorithm setup is tailored on the maximum amount of chromatic dispersion to be compensated and has a window overlap which is longer than that of the first CD compensation algorithm setup. The second CD compensation algorithm setup is thus tuned to cover the longest optical reach requirements. Consequently, the second CD compensation algorithm setup leads to higher consumed power by the CD compensating module 8 than with the first CD compensation algorithm setup. For illustrative purposes, the inventors found that the second CD compensation algorithm setup yields a power consumption of about 20 W by the CD compensating module 8, whereas the first CD compensation algorithm setup yields a power consumption of about 10 W.

The processing module 10 has an input connected to the output of the CD compensating module 8. In the exemplary embodiment of Figure 1, the processing module 10 has another input connected to the control plane apparatus 18. The processing module 10 is adapted to process the CD compensated signal 17, based on the selected digital demodulation processing setup, and to provide a digital processed signal 22 on its output. The processing module 10 comprises for example at least an adaptive equalizer for addressing linear polarization-dependent impairments such as polarization mode dispersion, a phase recovery module and a clock recovery module.

The correction decoder 12 has a first input connected to the output of the processing module 10. The correction decoder 12 further has a second input. In the exemplary embodiment of Figure 1, the second input of the correction decoder 12 is connected to the control plane apparatus 18. The correction decoder 12 is adapted to provide a digitally demodulated signal 23 on its output.

The correction decoder 12 comprises a plurality of decoding modules 24 and a module inhibitor 26. In the exemplary embodiment of Figure 1, the correction decoder 12 comprises four decoding modules 24 serially connected between the first input and the output of the correction decoder 12. According to this exemplary embodiment, the correction decoder 12 is preferably a soft-decision forward error correction decoder, and the decoding modules 24 are preferably low density parity check decoding modules.

The module inhibitor 26 has an input substantially corresponding to the second input of the correction decoder 12, and has a number of outputs equal to the number of decoding modules 24, each output being connected to one decoding module 24. In the exemplary embodiment of Figure 1, the input of the inhibitor 26 is connected to the control plane apparatus 18. The inhibitor 26 is adapted to inhibit some of the decoding modules 24, based on at least one predetermined parameter. In the exemplary embodiment of Figure 1, the inhibitor 26 is adapted to inhibit two decoding modules 24 among the four decoding modules 24, based on the value of the single predetermined parameter 20 transmitted by the control plane apparatus 18 to the inhibitor 26. The power consumed by the correction decoder 12 increases linearly with the number of non-inhibited decoding modules 24. Consequently, the correction decoder 12 consumes, at a constant bit rate, a higher power with four non-inhibited decoding modules 24 than with only two non-inhibited decoding modules 24. For illustrative purposes, the inventors found that four non-inhibited decoding modules 24 yields a power consumption of about 20 W by the correction decoder 12, whereas two non-inhibited decoding modules 24 yields a power consumption of about 10 W.

In a particular embodiment, the CD compensator stage 14, the selector 16, the processing module 10, the decoding modules 24 and the inhibitor 26 are functional components combined into a single physical card, arranged within the digital demodulator 6. Alternatively, the CD compensator stage 14, the selector 16, the processing module 10, the decoding modules 24 and the inhibitor 26 are functional components distributed variably between several cards based on considerations such as load, system security, etc.. These distributing operations fall within the ordinary skills of system architects and engineers in charge of computer systems. Likewise, these components may be duplicated.

The operation of the coherent optical receiver 4 of Figure 1 will now be described in detail.

In a prior step, the control plane apparatus 18 determines a data rate 20 of the optical communication network, preferably a wavelength-division multiplexing data rate, and transmits the data rate 20 to the CD compensating module 8, the processing module 10 and the correction decoder 12. The digital demodulator 6 then selects, either automatically or upon instructions of a user, the digital demodulation processing setup to be applied, based on the value of the data rate 20. For example, it is assumed that the data rate 20 transmitted by the control plane apparatus 18 has the first value (the higher value). The digital demodulator 6 then selects the second demodulation processing setup, namely the 16-state Quadrature Demodulation processing setup, which is the most suitable setup for such a data rate value. In parallel or after this first prior step, it is assumed that a modulated optical signal 2 is received by the coherent optical receiver 4.

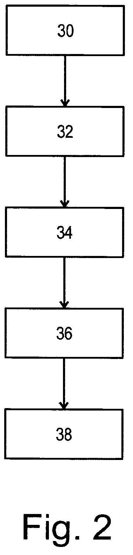

As mentioned above, the method is intended for digitally demodulating the entry modulated optical signal 2. The method is described with reference to Figure 2. It is assumed that in a further step the modulated optical signal 2 is converted into a digital modulated entry signal 19, within the optical receiver 4.

The method comprises a first step 30 during which the selector 16 selects one CD compensation algorithm setup among the first CD compensation algorithm setup and the second CD compensation algorithm setup, based on the value of the data rate 20. More precisely, according to the example above-mentioned, the selector 16 selects the first CD compensation algorithm setup. Indeed, the performance of this first CD compensation algorithm setup as to the achievable optical reach is acceptable given the lower optical reach of the selected 16-state Quadrature Demodulation processing setup. At the end of the first step 30, the selector 16 indicates to the CD compensator stage 14 that the first CD compensation algorithm setup is the selected algorithm setup.

In a following step 32, the CD compensator stage 14 applies the first CD compensation algorithm setup onto the digital modulated entry signal 19 received on its first input. At the end of the step 32, the CD compensator stage 14 provides a CD compensated signal 17 on its output.

In a following step 34, the processing module 10 processes the CD compensated signal 17, based on the selected digital demodulation processing setup, namely the 16-state Quadrature Demodulation processing setup according to the example above-mentioned. At the end of step 34, the processing module 10 provides a digital processed signal 22 on its output.

In a following step 36, the inhibitor 26 inhibits none of the decoding modules 24, due to the value of the data rate 20. Indeed, the use of all the available decoding modules 24 is required in order to compensate for the lesser robustness of the 16-state Quadrature Demodulation processing setup. Alternatively, the inhibition step 36 is performed between the compensating step 32 and the processing step 34, or in parallel of one of these steps. Alternatively again, the inhibition step 36 is performed between the selection step 30 and the compensating step 32, or in parallel of one of these steps.

In a following step 38, the non-inhibited decoding modules 24 decode the processed signal 22. More precisely, according to the example above-mentioned, the four non-inhibited decoding modules 24 decode the processed signal 22. At the end of step 38, the correction decoder 12 provides a digitally demodulated and decoded signal 23 on its output.

Conversely, assuming that the data rate 20 transmitted by the control plane apparatus 18 has the second value (the lower value), then the digital demodulator 6 initially selects the first demodulation processing setup (the Quadrature Phase-Shift Keying demodulation processing setup), the selector 16 selects the second CD compensation algorithm setup during step 30, and the inhibitor 26 inhibits two decoding modules 24 among the four decoding modules 24.

Thus, whatever the value of the data rate 20, the association between the CD compensating module 8 and the correction decoder 12 provides a fairly constant power consumption of about 30 W, which is then substantially reduced compared with that of the previous devices of the state of art. Consequently, the method according to the invention allows saving computational resources and reducing the power consumed by the receiver 4.

Figure 3 illustrates a second embodiment of the invention wherein elements similar to the first embodiment described above are identified by identical reference numbers and thus are not described again.

The coherent optical receiver 4 further comprises a memory 42 and an estimating module 44 connected to the memory 42. The module 44 is adapted for estimating a cumulated chromatic dispersion value and/or a quality factor value related to a lightpath. In the exemplary embodiment of Figure 3, the module 44 is adapted for estimating a cumulated chromatic dispersion value indicative of the amount of chromatic dispersion affecting optical signals which propagate along the optical communication network, as well as a quality factor value related to a lightpath of such optical signals. According to this exemplary embodiment the selector 16 is adapted to select one CD compensation algorithm setup among the first CD compensation algorithm setup and the second CD compensation algorithm setup, based on the value of a first predetermined parameter 20, a second predetermined parameter 46 and a third predetermined parameter 48. The first predetermined parameter 20 is preferably a data rate of the optical communication network, for instance a wavelength-division multiplexing data rate. The selection of the digital demodulation processing setup to be applied by the digital demodulator 6 further depends on the value of the first predetermined parameter 20. The second predetermined parameter 46 is the cumulated chromatic dispersion information indicative of the amount of chromatic dispersion affecting optical signals which propagate along the optical communication network, and the third predetermined parameter 48 is the quality factor related to a lightpath of such optical signals. The first predetermined parameter 20, the second predetermined parameter 46 and the third predetermined parameter 48 are each likely to have at least two distinct values. In the exemplary embodiment of Figure 3, the first predetermined parameter 20, the second predetermined parameter 46 and the third predetermined parameter 48 are each likely to have two distinct values: a first value and a second value, the first value being higher than the second one.

The estimating module 44 allows separately tuning the CD compensating module 8 and the correction decoder 12 so as to further decrease the overall consumed power in the coherent receiver 4 according to the parameters 20, 46 and 48 described above.

Alternatively, the coherent optical receiver 4 does not comprise the estimating module 44. According to this alternative, the memory 42 is connected to an external device adapted to provide a cumulated chromatic dispersion value and/or a quality factor value related to a lightpath. Such an external device is for example the control plane apparatus 18.

The memory 42 has a first input connected to estimating module 44. The memory 42 further has a second input. In the exemplary embodiment of Figure 3, the second input of the memory 42 is connected to the control plane apparatus 18. The memory 42 further has one output connected to the input of the selector 16, to one of the inputs of the processing module 10, and to the input of the inhibitor 26.

The memory 42 stores a look-up table 50. Preferably, according to the exemplary embodiment of Figure 3, the look-up table 50 has as inputs the first, second and third predetermined parameters 20, 46, 48. Besides, the look-up table 50 preferably has two final outputs, one of said outputs corresponding to the chromatic dispersion algorithm setup to be selected, the other output corresponding to a number of decoding modules 24 to be inhibited.

In the exemplary embodiment of Figure 3, the look-up table 50 takes for example the following form (without this table being exhaustive of all the possible comparisons):

| | | | | |
|---|---|---|---|---|
| First parameter | H | L | H | L |
| Second parameter | * | L | * | H |
| Third parameter | H | * | L | * |
| CD algorithm setup to be selected | 1st | 1st | 1st | 2nd |
| Number of decoding modules to be inhibited | 2 | 1 | 0 | 2 |

In the above look-up table :
- the sign " H " represents the first value (the higher value) of the first predetermined parameter, the second predetermined parameter or the third predetermined parameter,
- the sign " L " represents the second value (the lower value) of the first predetermined parameter, the second predetermined parameter or the third predetermined parameter,
- the sign " * " indicates that the corresponding value has no influence,
- the sign " 1st " represents the first CD compensation algorithm setup as described in the first embodiment of the invention, and
- the sign " 2nd " represents the second CD compensation algorithm setup as described in the first embodiment of the invention.

Thus, in this particular embodiment, the first column corresponds to a "high" value for both the data rate 20 and the quality factor 48. Since the value of the data rate 20 is "high", the second demodulation processing setup, namely the 16-state Quadrature Demodulation processing setup, is the demodulation setup to be selected. Besides, since the value of the quality factor 48 is "high", only two non-inhibited decoding modules 24 (i.e two inhibited decoding modules 24 as shown in the above table) are sufficient to deal with this high quality factor. These two non-inhibited decoding modules 24 yield a power consumption of about 10 W by the correction decoder 12. Thus, the power consumed by the CD compensating module 8 and the correction decoder 12 in this situation is of about 20 W.

Similarly, the second column corresponds to a "low" value for both the data rate 20 and the cumulated chromatic dispersion 46. Since the value of the data rate 20 is "low", the first demodulation processing setup, namely the Quadrature Phase-Shift Keying demodulation processing setup, is the demodulation setup to be selected. Besides, since the value of cumulated chromatic dispersion 46 is "low", the first CD compensation algorithm setup is sufficient to achieve the "shorter" optical reach requirements associated to this cumulated chromatic dispersion value. This yields a power consumption of about 10 W by the CD compensating module 8. Furthermore, only three non-inhibited decoding modules 24 (i.e one inhibited decoding module 24 as shown in the above table) are sufficient to deal with the quality factor target. This yields a power consumption of about 15 W by the correction decoder 12. Thus, the power consumed by the CD compensating module 8 and the correction decoder 12 in this situation is of about 25 W.

The last two columns of the look-up table correspond substantially to the situations described for a "high" value and a "low" value of the data rate 20 in the first embodiment of the invention. The power consumed by the CD compensating module 8 and the correction decoder 12 in these situations is then of about 30 W.

Consequently, the second embodiment of the invention allows further reducing the power consumed by the receiver 4 in some situations, from a power of 30 W to a power of about 25 W or even 20W. The maximum power consumption remains the same as that of the first embodiment, namely a maximum power consumption of about 30 W.

Prior to the operation of the optical receiver 4 of the exemplary embodiment of Figure 3, the control plane apparatus 18 determines a data rate 20 of the optical communication network, preferably a wavelength-division multiplexing data rate, and transmits the data rate 20 to the memory 42, which stores its value. After or in parallel of this prior step, the estimating module 44 estimates a cumulated chromatic dispersion information 46 and a quality factor 48, and transmits said chromatic dispersion information 46 and quality factor 48 to the memory 42, which stores their respective values. Depending on the stored values of the data rate 20, the chromatic dispersion information 46 and the quality factor 48, and on the look-up table 50, the memory 42 transmits the chromatic dispersion algorithm setup to be selected to the selector 16 and the number of decoding modules 24 to be inhibited to the inhibitor 26, as stated by the outputs of the look-up table 50 as mentioned above. The digital demodulator 6 then selects, either automatically or upon instructions of a user, the digital demodulation processing setup to be applied, based on the value of the data rate 20, and the memory 42 further transmits this selected demodulation setup to the processing module 10.

The rest of the operation of this second embodiment of the optical receiver 4 is similar to that of the first embodiment and is therefore not described in greater detail.

The method offers several advantages:
- reducing the power consumed by the optical coherent receiver notably allows increasing the density of cards in a shelf, which is a key selling point,
- the thermal footprint of the receiver is lowered, which induces positive impact on its reliability, as well as on the energy efficiency of the optical network.

A person skilled in the art would readily recognize that steps of the various above-described methods can be performed by programmed dedicated hardware as well as hardware capable of executing software in association with appropriate software. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any routers shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual, views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. In particular, although the invention is described with reference to a coherent optical receiver adapted to apply a digital demodulation processing setup among two distinct digital demodulation processing setups, based on two possible values for the predetermined parameter, the invention applies more generally to a coherent optical receiver adapted to apply a digital demodulation processing setup among a plurality of distinct digital demodulation processing setups, based on a plurality of possible values for the predetermined parameter.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for digitally demodulating an entry modulated optical signal (2), said entry optical signal (2) being received at a coherent optical receiver (4) of a node of an optical communication network, said coherent optical receiver (4) being adapted to select and apply a digital demodulation processing setup among at least two distinct digital demodulation processing setups, said coherent optical receiver (4) comprising a correction decoder (12) including a plurality of decoding modules (24), said method comprising:
• a step (30) of selection of a chromatic dispersion compensation algorithm setup among at least two distinct chromatic dispersion compensation algorithm setups, based on a value of at least one predetermined parameter (20; 46, 48) received by the coherent optical receiver (4),
• a step (32) of compensating chromatic dispersion of the entry optical signal (2), based on said selected algorithm setup,
• a step (34) of processing the compensated signal, said processing being based on the selected digital demodulation processing setup,
• a step (36) of inhibiting none or some of the decoding modules (24), based at least on said value of said predetermined parameter (20 ; 46, 48),
• a step (38) of decoding the processed signal, said decoding step (38) being performed by the non-inhibited decoding modules (24).

2. Method according to claim 1, wherein the selection (30) of a chromatic dispersion compensation algorithm setup and the inhibition (36) of none or some of the decoding modules (24) are based on the value of a single predetermined parameter (20) transmitted to the coherent optical receiver (4), said single predetermined parameter (20) being a data rate of the optical communication network, the selection of the digital demodulation processing setup applied on the entry optical signal (2) by the coherent optical receiver (4) depending on the value of said single predetermined parameter (20).

3. Method according to claim 2, wherein the data rate is a wavelength-division multiplexing data rate.

4. Method according to claim 1, wherein the selection (30) of a chromatic dispersion compensation algorithm setup and the inhibition (36) of none or some of the decoding modules (24) are based on the value of a first predetermined parameter (20) transmitted to the coherent optical receiver (4), combined with the value of a second predetermined parameter (46) and a third predetermined parameter (48), the first predetermined parameter (20) being a data rate of the optical communication network, notably a wavelength-division multiplexing data rate, the second predetermined parameter (46) being a cumulated chromatic dispersion information, the third predetermined parameter (48) being a quality factor related to a lightpath, the selection of the digital demodulation processing setup applied on the entry optical signal (2) by the coherent optical receiver (4) depending on the value of the first predetermined parameter (20).

5. Method according to claim 4, wherein the cumulated chromatic dispersion information and the quality factor related to a lightpath are transmitted to the coherent optical receiver or periodically estimated by the receiver.

6. Method according to claim 4 or 5, wherein the coherent optical receiver (4) further comprises a memory (42) that stores a look-up table (50), said look-up table (50) having as inputs said first, second and third predetermined parameters (20, 46, 48), said look-up table (50) having as outputs said chromatic dispersion algorithm setup to be selected and a number of said decoding modules (24) to be inhibited.

7. Computer program product comprising a set of instructions arranged, when it is executed by processing means, for performing the method according to one of the preceding claims to allow digitally demodulating an entry modulated optical signal (2).

8. Coherent optical receiver (4) for a node of an optical communication network, said coherent optical receiver (4) being equipped with a digital demodulator (6) adapted to digitally demodulate an entry modulated optical signal (2) by selecting and applying a digital demodulation processing setup among at least two distinct digital demodulation processing setups, said digital demodulator (6) **characterized by**:
• a chromatic dispersion compensating module (8) comprising a selector (16) of a chromatic dispersion compensation algorithm setup among at least two distinct chromatic dispersion compensation algorithm setups, based on at least one predetermined parameter (20 ; 46, 48),
• a processing module (10) connected to the chromatic dispersion compensating module (8), said processing module (10) being adapted to process the compensated signal, said processing being based on the selected digital demodulation processing setup,
• a correction decoder (12) connected to the processing module (10), said decoder (12) comprising a plurality of decoding modules (24) and an inhibitor (26) of some of these decoding modules (24) based on said at least one predetermined parameter (20 ; 46, 48).

9. Coherent optical receiver (4) according to claim 8, wherein the correction decoder (12) is a soft-decision forward error correction decoder.

10. Coherent optical receiver (4) according to claim 8 or 9, wherein the decoding modules (24) are low density parity check decoding modules.

11. Coherent optical receiver (4) according to any of claims 8 to 10, wherein the chromatic dispersion compensating module (8) comprises a Fast Fourier Transform buffer.

12. Coherent optical receiver (4) according to any of claims 8 to 11, wherein the coherent optical receiver (4) further comprises a memory (42) that stores a look-up table (50).

13. Coherent optical receiver (4) according to claim 12, wherein the coherent optical receiver (4) further comprises a module (44) adapted for estimating a cumulated chromatic dispersion value and/or a quality factor value related to a lightpath, said estimating module (44) being connected to the memory (42).

14. Optical communication network comprising at least two nodes, each node in turn comprising at least one coherent optical receiver (4) according to any of claims 8 to 13.

## Patentansprüche

1. Verfahren zum digitalen Demodulieren eines modulierten optischen Eingangssignals (2), wobei besagtes optisches Eingangssignal (2) an einem kohärenten optischen Empfänger (4) eines Knotens eines optischen Kommunikationsnetzwerks empfangen wird, wobei besagter kohärenter optischer Empfänger (4) dafür ausgelegt ist, um einen Set-up einer digitalen Demodulationsverarbeitung aus mindestens zwei verschiedenen Set-ups digitaler Demodulationsverarbeitungen auszuwählen, wobei besagter kohärenter optischer Empfänger (4) einen Korrekturdecoder (12) umfasst, der eine Vielzahl von Decodiermodulen (24) enthält, wobei besagtes Verfahren umfasst:
• einen Schritt (30) des Auswählens eines Set-ups eines Algorithmus zur Kompensation der chromatischen Dispersion aus mindestens zwei verschiedenen Setups von Algorithmen zur Kompensation chromatischer Dispersionen auf der Grundlage eines Werts von mindestens einem vordefinierten Parameter (20, 46, 48), der von dem kohärenten optischen Empfänger (4) empfangen wird,
• einen Schritt (32) des Kompensierens der chromatischen Dispersion des optischen Eingangssignals (2) auf der Grundlage von besagtem ausgewähltem Algorithmus-Set-up,
• einen Schritt des (34) Verarbeitens des kompensierten Signals, wobei besagtes Verarbeiten auf dem ausgewählten Set-up der digitalen Demodulationsverarbeitung beruht,
• einen Schritt (36) des Blockierens von keinem oder von einigen der Decodiermodule (24) auf der Grundlage von mindestens besagtem Wert besagten vordefinierten Parameters (20, 46, 48),
• einen Schritt (38) des Decodierens des verarbeiteten Signals, wobei besagter Decodierungsschritt (38) von den nicht blockierten Decodiermodulen (24) ausgeführt wird.

2. Verfahren nach Anspruch 1, wobei die Auswahl (30) eines Set-ups eines Algorithmus zur Kompensation chromatischer Dispersionen und das Blockieren (36) von keinem oder einigen der Decodiermodule (24) auf der Grundlage des Werts eines einzelnen vordefinierten Parameters (20) erfolgt, der an den kohärenten optischen Empfänger (4) übermittelt wird, wobei besagter einzelner vordefinierter Parameter (20) eine Datenrate des optischen Kommunikationsnetzwerks ist, wobei die Auswahl des Set-ups der digitalen Demodulationsverarbeitung, die von dem kohärenten optischen Empfänger (4) auf das optisches Eingangssignal (2) angewendet wird, von dem Wert besagten einzelnen vordefinierten Parametern (20) abhängt.

3. Verfahren nach Anspruch 2, wobei die Datenrate eine Wellenlängenmultiplex-Datenrate ist.

4. Verfahren nach Anspruch 1, wobei die Auswahl (30) des Set-up eines Algorithmus zur Kompensation chromatischer Dispersionen und das Blockieren (36) von keinem oder einigen der Decodiermodule (24) auf dem Wert eines ersten vordefinierten Parameters (20), der an den kohärenten optischen Empfänger (4) übermittelt wird, in Kombination mit dem Wert eines zweiten vordefinierten Parameters (46) und eines dritten vordefinierten Parameters (48) beruht, wobei der erste vordefinierte Parameter (20) eine Datenrate des optischen Kommunikationsnetzwerks ist, konkret eine Wellenlängenmultiplex-Datenrate, wobei der zweite vordefinierte Parameter (48) ein auf einen Strahlengang bezogener Qualitätsfaktor ist, wobei die Auswahl des Set-ups für die digitale Demodulierungsverarbeitung, die vom kohärenten optischen Empfänger (4) auf das optische Eingangssignal (2) angewendet wird, von dem Wert des ersten vordefinierten Parameters (20) abhängt.

5. Verfahren nach Anspruch 4, wobei die Informationen zur kumulierten chromatischen Dispersion und der auf einen Strahlengang bezogene Qualitätsfaktor an den kohärenten optischen Empfänger übermittelt oder periodisch vom Empfänger geschätzt werden.

6. Verfahren nach Anspruch 4 oder 5, wobei der kohärente optische Empfänger (4) weiterhin einen Speicher (42) umfasst, welcher eine Aufsuchtabelle (50) speichert, wobei besagte Aufsuchtabelle (50) als Eingaben besagten ersten, zweiten und dritten vordefinierten Parameter (20, 46, 48) hat, wobei besagte Aufsuchtabelle (50) als Ausgaben besagten auszuwählenden Set-up des Algorithmus zur Kompensation chromatischer Dispersionen und eine Anzahl besagter zu sperrender Decodiermodule (24) hat.

7. Ein Computerprogramm, einen Satz von Anweisungen umfassend, der dafür eingerichtet ist, um beim Ausführen durch die Verarbeitungsmittel das Verfahren nach einem jeglichem der vorgenannten Ansprüche auszuführen und so die digitale Demodulierung eines modulieren optischen Eingangssignals (2) zu ermöglichen.

8. Kohärenter optischer Empfänger (4) für einen Knoten eines optischen Kommunikationsnetzwerks, wobei besagter kohärenter optischer Empfänger (4) mit einem digitalen Demodulator (6) ausgestattet ist, der ausgelegt ist für das digitale Demodulieren eines modulierten optischen Eingangssignals (2) durch die Auswahl und Anwendung eines Set-ups für eine digitale Demodulierungsverarbeitung aus mindestens zwei verschiedenen Set-ups für digitale Demodulationsverarbeitungen, wobei besagter digitaler Demodulator (6) **gekennzeichnet ist durch**:
• ein Modul für die Kompensation der chromatischen Dispersion (8), welches einen Selektor (16) eines Set-ups für einen Algorithmus zur Kompensation chromatischer Dispersionen von mindestens zwei verschiedenen Set-ups für Algorithmen zur Kompensation chromatischer Dispersionen auf der Grundlage von mindestens einem vordefinierten Parameter (20, 46, 48) umfasst,
• ein Verarbeitungsmodul (10), das mit dem Modul für die Kompensation der chromatischen Dispersion (8) verbunden ist, wobei besagtes Verarbeitungsmodul (10) dafür ausgelegt ist, um das kompensierte Signal zu verarbeiten, wobei besagtes Verarbeiten auf der Grundlage des ausgewählten Set-ups für die digitale Demodulierungsverarbeitung erfolgt,
• einen Korrekturdecoder (12), der verbunden ist mit dem Verarbeitungsmodul (10), wobei besagter Korrekturdecoder (12) eine Vielzahl von Decodiermodulen (24) und einen auf dem besagten, mindestens einen vordefinierten Parameter (20, 46, 48) beruhenden Blockierer (26) für einige dieser Decodiermodule (24) umfasst.

9. Kohärenter optischer Empfänger (4) nach Anspruch 8, wobei der Korrekturdecoder (12) ein Soft-Decision-Vorwärtsfehlerkorrektur-Decoder ist.

10. Kohärenter optischer Empfänger (4) nach Anspruch 8 oder 9, wobei die Decodiermodule (24) Low-Density-Parity-Check-Decodiermodule sind.

11. Kohärenter optischer Empfänger (4) nach einem jeglichen der Ansprüche 8 bis 10, wobei das Modul für die Kompensation der chromatischen Dispersion (8) einen Fast-Fourier-Transform-Puffer umfasst.

12. Kohärenter optischer Empfänger (4) nach einem jeglichen der Ansprüche 8 bis 11, wobei der kohärente optische Empfänger (4) weiterhin einen Speicher (42) umfasst, der eine Aufsuchtabelle (50) speichert.

13. Kohärenter optischer Empfänger (4) nach Anspruch 12, wobei der kohärente optische Empfänger (4) weiterhin ein Modul (44) umfasst, das ausgelegt ist für das Schätzen eines Werts der kumulierten chromatischen Dispersion und/oder eines Qualitätsfaktorwerts zu einem Strahlengang, wobei besagtes Schätzmodul (44) mit dem Speicher (42) verbunden ist.

14. Optisches Kommunikationsnetzwerk, mindestens zwei Knoten umfassend, wobei jeder Knoten wiederum mindestens einen kohärenten optischen Empfänger (4) nach einem jeglichen der Ansprüche 8 bis 13 umfasst.

## Revendications

1. Procédé de démodulation numérique d'un signal optique modulé en entrée (2), appelé signal optique d'entrée (2) reçu par un récepteur optique cohérent (4) d'un noeud du réseau de communication optique, ledit récepteur optique cohérent (4) permettant de sélectionner et d'appliquer une configuration du traitement de démodulation numérique parmi deux configurations de traitement de démodulation numérique distinctes au moins, ledit récepteur optique cohérent (4) comprenant un décodeur de correction (12), y compris un ensemble de modules de décodage (24), ledit procédé comprenant :
• une étape (30) de sélection d'une configuration d'algorithme de compensation de la dispersion chromatique parmi au moins deux configurations d'algorithme de compensation de la dispersion chromatique, selon la valeur d'au moins un paramètre prédéterminé (20, 46, 48) reçu par le récepteur optique cohérent (4),
• une étape (32) de compensation de la dispersion chromatique du signal optique d'entrée (2), selon ladite configuration d'algorithme sélectionnée,
• une étape (34) de traitement dudit signal compensé, ledit traitement reposant sur la configuration du traitement de démodulation numérique sélectionnée,
• une étape (36) d'inhibition d'aucun ou de certains modules de décodage (24), en s'appuyant au moins sur ladite valeur dudit paramètre prédéterminé (20, 46, 48),
• une étape (38) de décodage du signal traité, ladite étape de décodage (38) étant réalisée par les modules de décodage non inhibés (24).

2. Procédé selon la revendication 1, dans lequel la sélection (30) d'une configuration d'algorithme de compensation de la dispersion chromatique et l'inhibition (36) d'aucun ou de certains modules de décodage (24) repose sur la valeur d'un seul paramètre prédéterminé (20) transmis au récepteur optique cohérent (4), ledit paramètre prédéterminé (20) étant un débit de données du réseau de communication optique, la sélection de la configuration du traitement de démodulation numérique appliquée au signal optique d'entrée (2) par le récepteur optique cohérent (4) en fonction de la valeur dudit paramètre prédéterminé (20).

3. Procédé selon la revendication 2, dans lequel le débit de données est un débit de données de multiplexage par répartition en longueur d'onde.

4. Procédé selon la revendication 1, dans lequel la sélection (30) d'une configuration d'algorithme de compensation de la dispersion chromatique et l'inhibition (36) d'aucun ou de certains modules de décodage (24) reposent sur la valeur d'un premier paramètre prédéterminé (20) transmis au récepteur optique cohérent (4), combinée à la valeur d'un deuxième paramètre prédéterminé (46) et d'un troisième paramètre prédéterminé (48), le premier paramètre prédéterminé (20) étant un débit de données du réseau de communication optique, notamment un débit de données de multiplexage par répartition en longueur d'onde, le deuxième paramètre prédéterminé (46) représentant les informations de dispersion chromatique cumulée, le troisième paramètre prédéterminé (48) étant un facteur de qualité lié à un chemin de lumière, la sélection de la configuration du traitement de démodulation numérique appliquée au signal optique d'entrée (2) par le récepteur optique cohérent (4) dépendant de la valeur du premier paramètre prédéterminé (20).

5. Procédé selon la revendication 4, dans lequel les informations de dispersion chromatique cumulée et le facteur de qualité lié à un chemin de lumière sont transmis au récepteur optique cohérent ou sont régulièrement estimés par le récepteur.

6. Procédé selon la revendication 4 ou 5, dans lequel le récepteur optique cohérent (4) comprend en outre une mémoire (42) qui stocke une table de consultation (50), ladite table de consultation (50) ayant en entrée les premier, deuxième et troisième paramètres prédéterminés (20, 46, 48), ladite table de consultation (50) présentant en sortie ladite configuration d'algorithme de dispersion chromatique destinée à être sélectionnée et un certain nombre desdits modules de décodage (24) destinés à être inhibés.

7. Produit de programme informatique comprenant un ensemble d'instructions conçu, lorsqu'il est exécuté par des moyens de traitement, pour mettre en oeuvre le procédé selon l'une des revendications précédentes pour permettre la démodulation numérique d'un signal optique modulé en entrée (2).

8. Récepteur optique cohérent (4) pour un noeud du réseau de communication optique, ledit récepteur optique cohérent (4) étant équipé d'un démodulateur numérique (6) adapté à la démodulation numérique d'un signal optique modulé en entrée (2) en sélectionnant et en appliquant une configuration du traitement de démodulation numérique parmi au moins deux configurations du traitement de démodulation numérique distinctes, ledit démodulateur numérique (6) **se caractérisant par** :
• un module de compensation de la dispersion chromatique (8) comprenant un sélecteur (16) d'une configuration d'algorithme de compensation de la dispersion chromatique parmi au moins deux configurations d'algorithme de compensation de la dispersion chromatique distinctes, reposant au moins sur un paramètre prédéterminé (20, 46, 48),
• un module de traitement (10) connecté au module de compensation de la dispersion chromatique (8), ledit module de traitement (10) étant adapté au traitement du signal compensé, ledit traitement reposant sur la configuration du traitement de démodulation numérique sélectionnée,
• un décodeur de correction (12) connecté au module de traitement (10), ledit décodeur (12) comprenant plusieurs modules de décodage (24) et un inhibiteur (26) de certains de ces modules de décodage (24) reposant sur au moins un paramètre prédéterminé (20, 46, 48).

9. Récepteur optique cohérent (4) selon la revendication 8, dans lequel le décodeur de correction (12) est un décodeur de correction d'erreurs sans voie de retour à décision pondérée.

10. Récepteur optique cohérent (4) selon la revendication 8 ou 9, dans lequel les modules de décodage (24) sont des modules de décodage de contrôle de parité à faible densité.

11. Récepteur optique cohérent (4) selon l'une des revendications 8 à 10, dans lequel le module de compensation de la dispersion chromatique (8) comprend un tampon de transformée de Fourier rapide.

12. Récepteur optique cohérent (4) selon l'une des revendications 8 à 11, dans lequel le récepteur optique cohérent (4) comprend en outre une mémoire (42) qui stocke une table de consultation (50).

13. Récepteur optique cohérent (4) selon la revendication 12, dans lequel le récepteur optique cohérent (4) comprend en outre un module (44) adapté à l'estimation d'une valeur de dispersion chromatique cumulée et/ou d'une valeur de facteur de qualité lié à un chemin de lumière, ledit module d'estimation (44) étant connecté à la mémoire (42).

14. Réseau de communication optique comprenant au moins deux noeuds, chacun composé d'au moins un récepteur optique cohérent (4) selon l'une des revendications 8 à 13.
